# FASCICULE DE BREVET EUROPEEN

(11) **EP 2 249 738 B1**
(45) Date de publication et mention de la délivrance du brevet: **12.10.2011**
(21) Numéro de dépôt: 09713386.2
(22) Date de dépôt: 30.01.2009
(51) Int. Cl.: A61C 7/04, A61C 7/14

(54) **PRECELLE POUR VERROU ORTHODONTIQUE**
PINZETTE FÜR ORTHODONTISCHEN VERSCHLUSS
TWEEZERS FOR ORTHODONTIC LOCK

(30) Priorité: 22.02.2008 FR 0800956
(43) Date de publication de la demande: 17.11.2010
(73) Titulaire: Clor, Charles, 68000 Colmar (FR)
(72) Inventeur: Clor, Charles, 68000 Colmar (FR)
(74) Mandataire: Derambure, Christian
(86) Numéro de dépôt international: PCT/FR2009/050144
(87) Numéro de publication internationale: WO 2009/103913

(56) Documents cités:
- US-A- 5 810 582
- US-A- 5 868 787
- US-A1- 2006 057 533
- US-B1- 6 290 495
- US-B2- 6 447 291

## Description

L'invention concerne une précelle de positionnement d'un verrou orthodontique sur une dent, une unité orthodontique comprenant une telle précelle et un tel verrou orthodontique pour une dent donnée, un ensemble comprenant une pluralité de telles unités, et enfin le procédé de mise en oeuvre d'une telle unité orthodontique.

On connaît, en orthodontie, des verrous - couramment appelés « brackets » - destinés à la correction de l'alignement des dents d'une personne. Le document WO 2006/097657 décrit un tel verrou dans une réalisation où le verrou est autobloquant.

Pour le positionnement et la mise en place de tels verrous, on utilise des précelles de différentes formes (à mors droits, à mors angulés, à mors larges, à mors fins, à mors coudés...). Dans certaines réalisations, la précelle comporte une lame de positionnement du verrou.

On connaît également des jauges de positionnement des verrous sur les dents devant les recevoir destinées au réglage vertical de la hauteur du verrou sur la dent. Dans certaines réalisations, une telle jauge est intégrée à une précelle avec vis de réglage.

Les documents US-A-5,607,299 et US-A-6,447,291 décrivent de tels verrous orthodontiques et de telles précelles. Le document FR-A-2 901 994 décrit quant à lui un gabarit de mise en place pour un dispositif orthodontique.

US-A-2006 057 533 décrit une précelle de positionnement d'un verrou orthodontique sur une dent. Cette précelle comporte deux branches de manipulation avec des moyens élastiques terminées par deux mors de saisie du verrou en vue de son positionnement sur une dent à l'emplacement et avec l'orientation souhaité. Les deux faces internes des deux mors sont aptes à coopérer de façon amovible avec les deux faces latérales du verrou. Au moins un prolongement s'étend à partir d'une extrémité libre de l'un des mors avec une angulation et sur une longueur appropriées à ce que le prolongement soit apte, lors de la mise en oeuvre de la précelle, à s'étendre sensiblement parallèlement à l'axe de la dent en direction de la face occlusale. La précelle comprend, à l'extrémité opposée aux mors, un retour apte à venir en butée sur la face occlusale de la dent.

Les dispositifs connus présentent un certains nombre de contraintes, de limites, plus généralement d'inconvénients.

Les précelles avec jauge sont aujourd'hui peu utilisées compte tenu des risques d'erreurs qu'elles présentent compte tenu que le pas de vis peut être déplacé inopportunément. En outre, leur mise en oeuvre est complexe.

Plus généralement, les dispositifs connus présentent comme premier inconvénient une mise en oeuvre en deux étapes : pose du verrou sur la dent au moyen de la précelle ensuite reposée sur un plateau, utilisation de la jauge de hauteur en fonction de la dent. Or, entre ces deux étapes, le verrou peut se déplacer inopportunément sur la dent ou la colle peut durcir alors que le verrou n'a pas encore été placé dans sa position définitive.

Un deuxième inconvénient tient aux jauges utilisées, inadaptées dans le cas de verrous comportant un torque et une angulation de la gorge ou « slot », comme il est désigné habituellement, de réception de l'arc, ou encore dans le cas de verrous auto-ligaturant, celui-ci devant être ouvert au moment de l'utilisation de la jauge.

Un troisième inconvénient est que les précelles actuelles ne permettent pas de saisir le verrou de façon connue et maîtrisée.

Il existe donc le besoin de précelles de positionnement de verrous orthodontiques sur des dents (ou sur des modèles de dents) qui permettent un positionnement à la fois connu, précis et reproductible, sans risque d'erreur ou d'événements inopinés, et ce de façon aisée et rapide.

A cet effet, et selon un premier aspect, l'invention propose une précelle de positionnement d'un verrou orthodontique sur une dent, comportant deux branches de manipulation avec moyens élastiques terminées par deux mors de saisie du verrou en vue de son positionnement et le plus souvent de sa solidarisation sur une dent à l'emplacement et avec l'orientation souhaités, comprenant en outre:
- deux saillies dirigées l'une vers l'autre, ménagées sur les deux faces internes des deux mors, aptes à coopérer de façon amovible, avec ajustement, avec deux creux opposés l'un à l'autre ménagés sur les deux faces latérales du verrou,
- au moins un prolongement s'étendant à partir d'une extrémité libre de l'un au moins des mors avec une angulation et sur une longueur appropriées à ce que le prolongement soit apte, lors de la mise en oeuvre de la précelle, à s'étendre sensiblement parallèlement à l'axe de la dent en direction de sa face occlusale,
- au moins un retour s'étendant transversalement à partir d'une extrémité libre d'au moins un prolongement, apte, lors de la mise en oeuvre de la précelle, à venir en butée sur la face occlusale de la dent.

Selon une réalisation, les deux saillies sont coaxiales et aptes à coopérer avec deux creux coaxiaux, avec possibilité de pivotement relatif au moins dans une certaine plage.

Selon un premier mode de réalisation, les deux saillies sont coaxiales d'axe sensiblement perpendiculaire aux faces internes respectives des mors.

Selon un second mode de réalisation, les deux saillies sont coaxiales d'axe incliné par rapport aux faces internes respectives des mors.

Selon un premier mode de réalisation, les deux mors ont deux faces internes parallèles au plan de symétrie de la précelle.

Selon un second mode de réalisation, les deux mors ont deux faces internes parallèles, inclinées par rapport au plan de symétrie de la précelle.

Selon un premier mode de réalisation, la précelle comprend un retour s'étendant essentiellement dans une direction apte à se trouver au moins sensiblement orthogonalement au plan longitudinal de la dent.

Selon un second mode de réalisation, la précelle comprend un retour s'étendant dans deux directions sensiblement perpendiculaires, une première direction apte à se trouver au moins sensiblement orthogonale au plan longitudinal de la dent et une seconde direction apte à se trouver au moins sensiblement dans le plan longitudinal de la dent en direction de son plan transversal.

Selon une réalisation, la précelle est telle que ses dimensions et angulations sont spécialement adaptées à la dent à laquelle elle est destinée et selon le type de technique utilisé par l'orthodontiste.

Selon un premier mode de réalisation, la précelle comporte par un seul prolongement et un seul retour sur l'un seulement des mors.

Selon un second mode de réalisation, la précelle comporte deux prolongements et deux retours, un pour chaque mors.

Selon une réalisation particulière, la précelle est spécialement destinée à l'arcade inférieure de la mâchoire, le prolongement s'étendant à partir d'un mors vers le haut.

Selon une autre réalisation particulière, la précelle est spécialement destinée à l'arcade supérieure de la mâchoire, le prolongement s'étendant à partir d'un mors vers le bas.

Selon un deuxième aspect, l'invention concerne une unité comprenant une précelle telle qu'elle vient d'être décrite et un verrou orthodontique ayant deux creux opposés l'un à l'autre ménagés sur les deux faces latérales, aptes à coopérer avec les deux saillies de la précelle, de façon amovible et avec ajustement.

Selon un troisième aspect, l'invention concerne un ensemble comprenant une pluralité d'unités telles que celle qui vient d'être décrite, chaque unité correspondant à l'une des dents devant recevoir un verrou orthodontique.

On décrit maintenant plusieurs modes de réalisation de l'invention à l'aide des dessins dans lesquels :

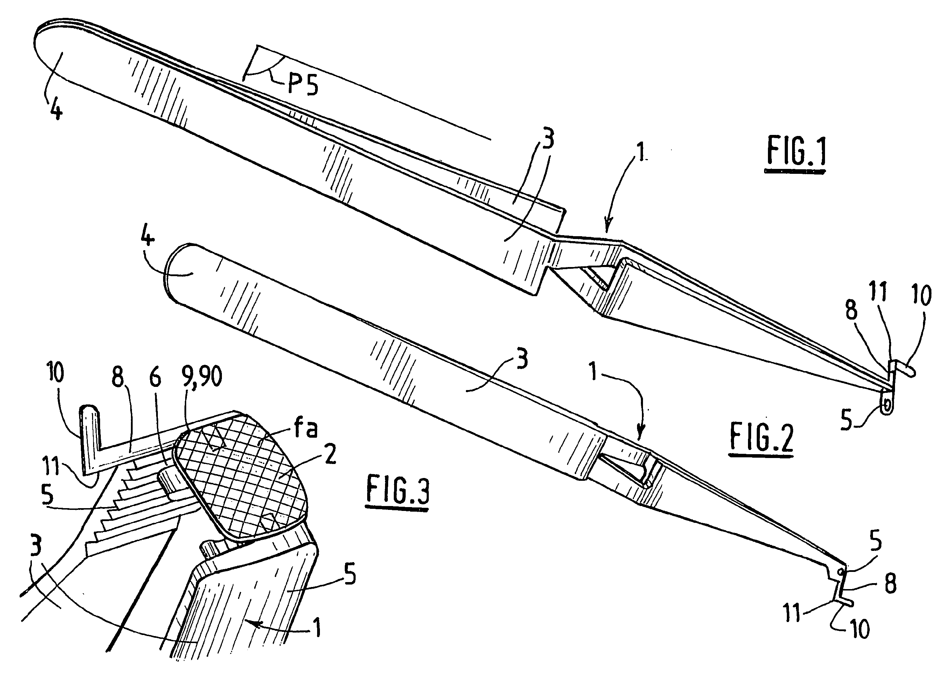

- les figures 1 et 2 sont deux vues en perspectives d'une précelle selon l'invention, respectivement pour l'arcade supérieure et pour l'arcade inférieure,
- la figure 3 est une vue partielle, à plus grande échelle, en perspective, d'une précelle avec un verrou orthodontique associé,
- la figure 4 est une vue en élévation, de face, d'une précelle pour l'arcade inférieure, avec un verrou orthodontique associé en situation sur une dent,
- la figure 5 est une vue, de côté, d'une précelle telle que celle de la figure 4, pour l'arcade inférieure, avec un verrou orthodontique associé en situation sur une dent,
- la figure 6 est une vue en élévation, de face, d'une précelle pour l'arcade supérieure, avec un verrou orthodontique associé en situation sur une dent,
- la figure 7 est une vue, de côté, d'une précelle telle que celle de la figure 6, pour l'arcade supérieure, avec un verrou orthodontique associé en situation sur une dent,
- les figures 8 et 9 sont deux vues en élévation de deux autres variantes de réalisation de précelle.

La précelle 1 est destinée au positionnement - et le plus souvent *in fine* à la solidarisation rigide (au moyen de colle ou analogue)- d'un verrou orthodontique 2 sur une dent ou un modèle de dent d. Dans l'ensemble de la description et dans les revendications le mot « dent » vise à la fois la dent d'une personne et un modèle de dent, comme cela est connu dans le domaine de l'orthodontie.

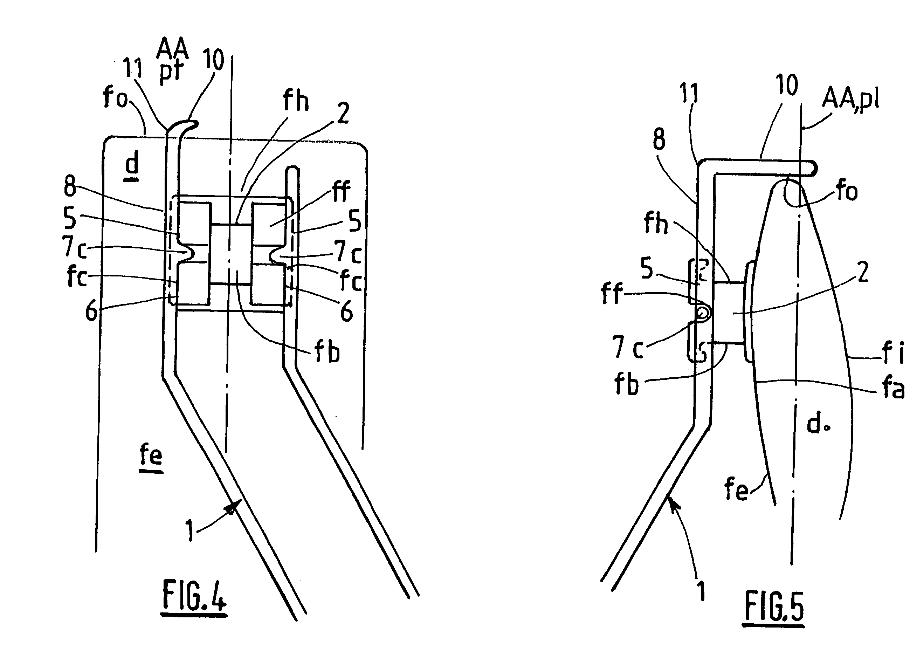

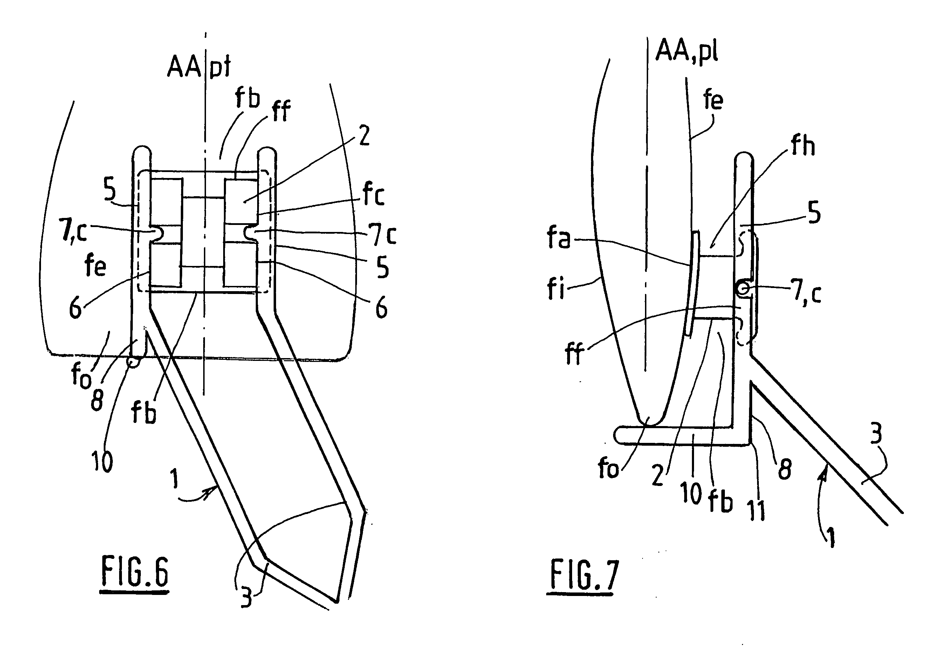

Pour les besoins de la description, on définit, s'agissant de la dent d, son axe AA, sa face occlusale fo, ses faces interne fi et externe fe, son plan longitudinal pl (plan des figures 4 et 6) et son plan transversal pt (plan des figures 5 et 7).

Il est entendu que l'invention s'applique à toute dent - incisive, canine, prémolaire ou molaire - susceptible de recevoir un verrou orthodontique 2. Une telle dent d fait partie d'une mâchoire et appartient soit son arcade inférieure (figures 4 et 5) soit à son arcade supérieure (figures 6 et 7).

Le verrou orthodontique 2, tant dans son ensemble que dans ses parties constitutives, peut faire l'objet de différentes variantes constructives, tant en ce qui concerne sa conception que sa réalisation.

Un exemple de verrou orthodontique 2 auquel les précelles 1 sont bien adaptées - en l'espèce un verrou autobloquant - est décrit dans le document WO 2006/097657.

Pour les besoins de la description, on définit, s'agissant du verrou orthodontique 2, une face d'appui fa, à savoir la face destinée à être solidarisée contre une face correspondante fi ou fe de la dent d. En outre, le verrou 2 s'inscrit généralement dans une enveloppe de forme générale parallélépipédique ou pseudo-parallélépipédique comportant une face frontale ff opposée à la face d'appui fa, deux faces latérales respectivement haute fh et basse fb et deux faces latérales de côté fc.

Il est entendu que les termes « inférieur », « supérieur », « haut », « bas », « vertical », « horizontal », « au-dessus », « au-dessous »... se comprennent en référence à une dent, ou une dentition, d'une personne ayant la tête droite. Mais, il est entendu que les précelles 1 comme les verrous orthodontiques 2 peuvent occuper des positions autres que celles correspondant à leur usage sur la personne considérée. Ces termes sont donc illustratifs mais non limitatifs.

L'expression « lors de la mise en oeuvre de la précelle », parfois utilisée, correspond à la situation d'une précelle 1 qui supporte un verrou orthodontique 2 et est disposée - car portée ainsi par l'orthodontiste - de manière que le verrou orthodontique 2 soit placé contre la dent sans la position et avec l'orientation souhaités. Les termes « inférieur », « supérieur », « haut », « bas », « vertical », « horizontal », « au-dessus », « au-dessous »... se réfèrent également à cette situation, la dent ayant la position qui vient d'être indiquée.

Le verrou orthodontique 2, dans la réalisation ici considérée, comporte également une gorge, couramment appelée slot, destinée à recevoir un arc. La gorge débouche sur la face frontale ff par une entrée de gorge allongée. La gorge débouche également sur les deux faces latérales de côté fc par des trous t.

Dans une réalisation, le verrou orthodontique 2 comporte une première partie de base incluant la face d'appui fa et une seconde partie incluant la gorge. Le cas échéant, il est prévu une certaine angulation entre ces deux parties.

Pour une arcade donnée, il est prévu plusieurs verrous orthodontiques 2 situés sur différentes dents - successives ou non - de l'arcade, traversés par un même arc.

La précelle 1 comporte d'abord deux branches de manipulation 3 avec moyens élastiques, tendant à ce que, en l'absence de toute sollicitation extérieure, la précelle 1 soit fermée, ses mors 5 l'un contre l'autre.

Les moyens élastiques sont constitués par les branches elles-mêmes qui présentent une élasticité intrinsèque.

Les deux branches de manipulation 3 sont d'une longueur suffisante pour permettre la manipulation (déplacement, ouverture, fermeture...) par l'orthodontiste ou son personnel.

Selon une réalisation typique, les deux branches de manipulation 3 se croisent en un point voisin des mors 5, de manière que l'on ouvre la précelle 1 en appuyant sur les branches à l'écart des mors 5.

Les deux branches de manipulation 3 définissent un plan principal de symétrie ps, de part et d'autre duquel se trouvent chacune des deux branches de manipulation 3.

Les deux branches de manipulation 3 sont réunies l'une à l'autre par l'une de leurs extrémités 4.

Les deux branches de manipulation 3 sont terminées à leur autre extrémité opposée par deux mors 5, limités chacun par une face interne 6, sensiblement plane.

Les deux faces internes 6 sont sensiblement parallèles l'une à l'autre.

Dans la réalisation des figures 4 à 8, les deux faces internes 6 des mors 5 sont parallèles au plan principal de symétrie ps des deux branches de manipulation 3.

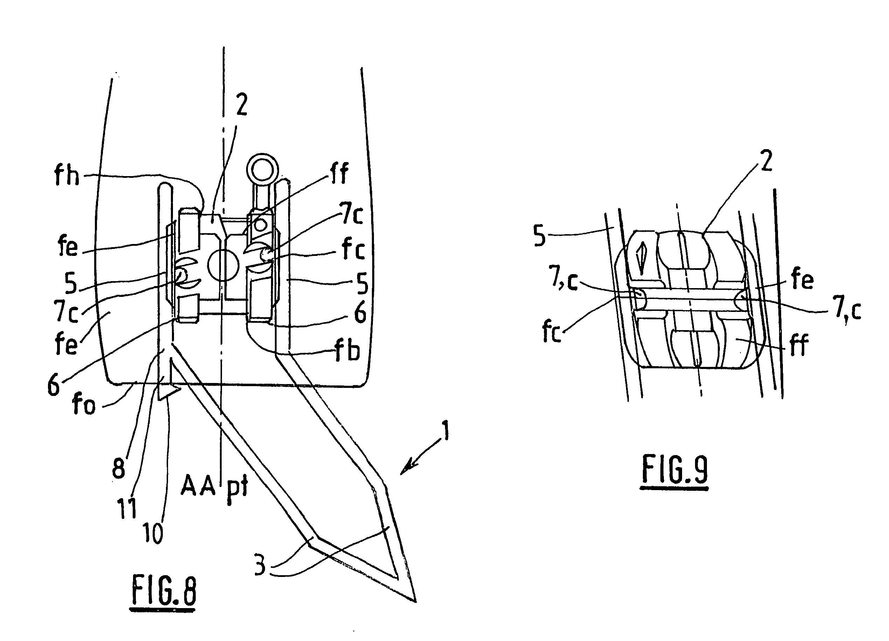

Dans la réalisation de la figure 9, les deux faces internes 6 des mors 5 sont inclinées d'un angle α sur le plan ps. Cette réalisation est adaptée au cas d'un verrou orthodontique 2 dont la partie incluant la gorge présente une angulation avec la partie de base incluant la face d'appui fa. L'angle α peut, par exemple, être de l'ordre de quelques degrés, plus généralement inférieur à 30°.

Les mors 5 sont destinés à la saisie du verrou orthodontique 2, en vue de son positionnement et de son orientation, et, le plus souvent *in fine*, de sa solidarisation, sur une dent d à l'emplacement et avec l'orientation souhaités.

Les mors 5 ont une taille au moins sensiblement égale à celle des faces latérales de côté fc du verrou orthodontique 2, de sorte qu'ils enveloppent, au moins sensiblement, les faces latérales de côté fc du verrou orthodontique 2.

La précelle 1 comporte deux saillies 7 dirigées l'une vers l'autre, ménagées sur les deux faces internes 6 des deux mors 5, en l'espèce dans leur partie médiane.

En l'espèce, une saillie 7 est en forme de pion de forme générale cylindrique, et, dans la réalisation générale, de diamètre adapté à la taille du slot.

Les deux saillies 7 sont agencées de manière à être aptes à coopérer de façon amovible, avec ajustement, avec deux creux c opposés l'un à l'autre, ménagés sur les deux faces latérales de côté fc du verrou orthodontique 2. On comprend donc que la précelle 1 implique l'emploi d'un tel type de verrou orthodontique 2.

On entend par coopération de façon amovible et avec ajustement, le fait que le jeu entre les saillies et les creux c permet de faire pénétrer les saillies 7 dans les creux c, de les enlever, l'un et l'autre sans effort excessif, et une fois associés qu'il n'y ait pas de déplacement intempestif latéral significatif entre eux.

La face externe des saillies 7 en forme de pions et la face interne conjuguée des creux c du verrou orthodontique 2 sont donc lisses ou du moins suffisamment lisses pour permettre l'ajustement et l'amovibilité recherchés.

Dans les réalisations représentées, les deux saillies 7 sont coaxiales, de même que les deux creux c. Dans ce cas, il est prévu en outre une possibilité de pivotement relatif, au moins dans une certaine plage, des saillies 7 par rapport aux creux c, c'est-à-dire du verrou orthodontique 2 par rapport aux mors 5 et donc par rapport à la précelle 1. Dans cette réalisation, les sections droites transversales des saillies 7 en forme de pions et des creux c du verrou orthodontique 2 sont agencées pour permettre le pivotement recherché, notamment ces sections droites transversales - au moins l'une de deux sections conjuguées - ont une forme circulaire.

Cette disposition constructive est avantageuse en ce qu'elle a pour effet que lorsque l'on applique fermement le verrou orthodontique 2 sur la dent d, par exemple pour sa solidarisation, la face d'appui fa du verrou orthodontique 2 est parfaitement appliquée sur la face correspondante fi ou fe de la dent d, sans risque d'écartement ou de bâillement, comme cela se révèle être le cas lorsque l'on utilise les jauges de l'état connu de la technique.

Dans le cas des figures 4 à 6, les deux saillies coaxiales 7 ont un axe perpendiculaire ou sensiblement perpendiculaire aux faces internes 6 respectives des mors 5.

Dans le cas des figures 8 et 9, les deux saillies coaxiales 7 ont un axe incliné par rapport aux faces internes 6 respectives des mors 5 d'un angle β. L'angle β peut varier de zéro à une trentaine de degrés, selon la technique utilisée par l'orthodontiste.

La disposition constructive à saillies 7 et creux c décrite a pour fonction d'assurer un positionnement du verrou orthodontique 2 par rapport à la précelle 1 qui, abstraction faite de la possibilité de pivotement relatif précédemment mentionnée, est connu, précis, reproductible, sans risque d'erreur, et ce de façon aisée et rapide.

Dans une réalisation, les creux c sont constitués par les trous, c'est-à-dire les parties terminales de la gorge.

Dans une autre réalisation, les creux c sont distincts des trous.

Le positionnement des saillies 7 sur les faces internes 6 et le positionnement des creux c sur les faces latérales de côté fc correspond à la position relative souhaitée du verrou orthodontique 2 par rapport à la précelle 1.

La précelle 1 comporte également au moins un - et dans le cas des réalisations représentées sur les figures un seul - prolongement 8 s'étendant à partir d'une extrémité libre 9 de l'un des mors 5.

Ce prolongement 8 s'étend, par rapport à cette extrémité libre 9, avec une angulation et sur une longueur appropriées à la fonction remplie, comme il est exposé par la suite.

Le prolongement 8 est en effet conçu, tout d'abord, pour être apte, lors de la mise en oeuvre de la précelle 1, à s'étendre sensiblement parallèlement à l'axe AA de la dent d en direction de la face occlusale fo.

Le prolongement 8 est conçu, ensuite, pour être apte, lors de la mise en oeuvre de la précelle 1, à ce qu'un retour 10, faisant partie de la précelle 1 et décrit par la suite, vienne en butée sur la face occlusale fo.

En effet, la précelle 1 comporte, en outre, au moins un - et dans le cas des réalisations représentées sur les figures un seul - retour 10 s'étendant transversalement à partir d'une extrémité libre 11 du prolongement 8. Cette extrémité 11 est à l'opposé d'un chant.

Dans les réalisations représentées sur les figures, le prolongement 8 a une forme générale de tige fine, ou une forme équivalente disposée sensiblement verticalement lors de la mise en oeuvre de la précelle 1.

Le prolongement 8 prolonge le chant d'extrémité du mors 5 à partir de l'une de ses extrémités 9 (dépendant de la destination de la précelle comme il est exposé par la suite), le prolongement 8 et le chant étant au moins sensiblement coplanaires ou colinéaires.

Lors de la mise en oeuvre de la précelle 1, le chant vient parallèlement à la face fi ou fe de la dent d sur laquelle le verrou orthodontique 2 est destiné à être positionné, orienté et solidarisé.

Le retour 10 a également une forme générale de tige fine, ou une forme équivalente.

Le prolongement 8 et le retour 10 peuvent constituer un ensemble monobloc avec le reste de la précelle 1.

Dans le cas général, le retour 10 s'étend essentiellement dans une direction sensiblement perpendiculaire au prolongement 8 et dans le sens prolongeant les deux branches de manipulation 3, de manière que lors de la mise en oeuvre de la précelle 1, le retour 10 est au moins sensiblement orthogonal au plan longitudinal pl de la dent d, tout en étant dirigé vers la dent d, elle-même, pour pouvoir interférer avec sa face occlusale fo, par un mouvement de coulissement vertical approprié.

Dans le cas d'une dent d pointue, on prévoit un retour 10 en forme générale de bande, ou de forme équivalente c'est-à dire s'étendant en surface, le retour 10 s'étendant ainsi non seulement dans la première direction précédemment mentionnée, mais également dans une seconde direction perpendiculaire à la première. Du fait de cette disposition constructive, lors de la mise en oeuvre de la précelle 1, le retour 10 s'étend aussi dans le plan longitudinal pl de la dent d vers son plan transversal pt et l'on est assuré que le retour 10 puisse interférer avec la dent d.

Dans la réalisation à un seul prolongement 8 et un seul retour 10, ce prolongement 8 et ce retour 10 sont associés à l'un des deux mors 5, l'autre en étant dépourvu

Dans une autre réalisation possible, la précelle 1 comporte deux prolongements et deux retours tels que 8 et 10. Ces deux paires d'un prolongement et d'un retour 8, 10, sont similaires. Chaque paire d'un prolongement et d'un retour 8, 10, est associée à un mors 5.

La structure, les dimensions et les angulations de la précelle 1 sont spécialement adaptées à la dent d à laquelle elle est destinée. Tel est le cas, en particulier de la longueur du prolongement 8 qui conditionne la position verticale du verrou orthodontique 2 sur la dent d, laquelle est un paramètre conditionnant le fonctionnement de l'ensemble d'orthodontie à verrou et arc associé. Ainsi, plus le prolongement 8 est court, plus le verrou orthodontique 2 sera placé sur la dent d à proximité de la face occlusale fo. Inversement, plus le prolongement 8 est long, plus le verrou orthodontique 2 sera placé sur la dent d éloigné de la face occlusale fo.

Préférentiellement, on prévoit pour le prolongement 8, plusieurs longueurs types correspondant à des implantations standards.

Par ailleurs, la structure de la précelle 1 dépend de sa destination, à savoir une dent d de l'arcade inférieure ou une dent d de l'arcade supérieure de la mâchoire. En effet, les positions relatives respectives des faces occlusales fo par rapport à la précelle 1, plus spécialement aux mors 5, peuvent être qualifiées d'opposées.

Dans le cas d'une précelle 1 spécialement destinée à l'arcade inférieure de la mâchoire (figures 4 et 5), le prolongement 8 s'étend vers le haut de la précelle 1. Dans cet arrangement, le prolongement 8 est situé au dessus des saillies 7 et le retour 10 est situé au-dessus du prolongement 8, le verrou orthodontique 2 étant placé au-dessous de la face occlusale fo.

Inversement, dans le cas d'une précelle 1 spécialement destinée à l'arcade supérieure de la mâchoire (figures 6 et 7), le prolongement 8 s'étend vers le bas de la précelle 1. Dans cet arrangement, le prolongement 8 est situé au dessous des saillies 7 et le retour 10 est situé au-dessous du prolongement 8, le verrou orthodontique 2 étant placé au-dessus de la face occlusale fo.

Dans l'un des cas, le prolongement 8 prolonge le chant d'extrémité du mors 5 à partir de sa première extrémité 9, tandis que dans l'autre cas, le prolongement 8 prolonge le chant d'extrémité du mors 5 à partir de sa seconde extrémité 9.

L'invention concerne également une unité comprenant une précelle 1 et un verrou orthodontique 2 adapté, tels qu'ils ont été décrits. Une telle unité est destinée à une dent d identifiée.

L'invention concerne également un ensemble comprenant une pluralité de telles unités, chaque unité correspondant à l'une des dents d d'une mâchoire devant recevoir un verrou orthodontique 2. L'orthodontiste a donc à sa disposition autant de précelles 1 et de verrous orthodontique 2 que dents d à équiper, chaque unité étant adaptée à la dent.

Lors de la mise en oeuvre, ces différentes unités peuvent être préparées sur un plateau.

Dans un procédé de mise en oeuvre d'une unité orthodontique telle qu'elle a été décrite, on part d'une situation dans laquelle on dispose d'un verrou orthodontique 2 et d'une précelle 1 adaptée au verrou 2 et à la dent d en cause.

Puis, on positionne manuellement le verrou orthodontique 2 entre les deux mors 5 de la précelle 1.

A cet effet, on place les saillies 7 de la précelle 1 dans les creux c du verrou orthodontique 2. Les faces internes 6 des mors 5 viennent contre les faces latérales de côté fc du verrou orthodontique 2, par l'effet des moyens élastiques sur les deux branches de manipulation 3 de la précelle 1. Par ailleurs, on dispose la face d'appui fa du verrou orthodontique 2 vers l'extrémité extérieure de la précelle 1, de façon qu'elle puisse être exposée à la dent d.

Puis, on manipule la précelle 1 ainsi garnie du verrou orthodontique 2 afin d'amener la face d'appui fa vers la face fi ou fe de la dent d devant recevoir le verrou orthodontique 2.

Puis, on positionne le verrou orthodontique 2 à l'emplacement souhaité sur la dent d, avec l'orientation souhaité. A cet effet, on vient mettre en butée le retour 10 de la précelle 1 sur la face occlusale fo de la dent d, moyennant un petit mouvement de coulissement vertical.

Selon une réalisation, on assure en outre la solidarisation du verrou orthodontique 2 sur la dent d, au moyen de colle, par les techniques connues en orthodontie.

## Revendications

1. Précelle (1) de positionnement d'un verrou orthodontique (2) sur une dent (d), comportant deux branches de manipulation (3) avec moyens élastiques terminées par deux mors (5) de saisie du verrou (2) en vue de son positionnement et le plus souvent de sa solidarisation sur une dent (d) à l'emplacement et avec l'orientation souhaités, comprenant en outre:
- deux saillies (7) dirigées l'une vers l'autre, ménagées sur les deux faces internes (6) des deux mors (5), aptes à coopérer de façon amovible, avec ajustement, avec deux creux (c) opposés l'un à l'autre ménagés sur les deux faces latérales (fc) du verrou (2),
- au moins un prolongement (8) s'étendant à partir d'une extrémité libre (9) de l'un au moins des mors (5) avec une angulation et sur une longueur appropriées à ce que le prolongement (8) soit apte, lors de la mise en oeuvre de la précelle (1), à s'étendre sensiblement parallèlement à l'axe (AA) de la dent (d) en direction de la face occlusale (fo),
- au moins un retour (10) s'étendant transversalement à partir d'une extrémité libre (11) d'au moins un prolongement (8), apte, lors de la mise en oeuvre de la précelle (1), à venir en butée sur la face occlusale (fo) de la dent (d).

2. Précelle (1) selon la revendication 1, **caractérisée en ce que** les deux saillies (7) sont coaxiales et aptes à coopérer avec les deux creux coaxiaux (c), avec possibilité de pivotement relatif au moins dans une certaine plage.

3. Précelle (1) selon l'une quelconque des revendications 1 et 2, **caractérisée en ce que** les deux saillies (7) sont coaxiales d'axe sensiblement perpendiculaire aux faces internes respectives (6) des mors (5).

4. Précelle (1) selon l'une quelconque des revendications 1 et 2, **caractérisée en ce que** les deux saillies (7) sont coaxiales d'axe incliné par rapport aux faces internes respectives (6) des mors (5).

5. Précelle (1) selon l'une quelconque des revendications 1 à 4, **caractérisée en ce que** les deux mors (5) ont deux faces internes (6) parallèles au plan de symétrie (ps) de la précelle (1).

6. Précelle (1) selon l'une quelconque des revendications 1 à 4, caractériséé en ce que les deux mors (5) ont deux faces internes (6) parallèles, inclinées par rapport au plan de symétrie (ps) de la précelle (1).

7. Précelle (1) selon l'une quelconque des revendications 1 à 6, **caractérisée en ce que** le retour (10) s'étend essentiellement dans une direction apte à se trouver au moins sensiblement orthogonal au plan longitudinal (pl) de la dent (d).

8. Précelle (1) selon l'une quelconque des revendications 1 à 6, **caractérisée en ce que** le retour (10) s'étend dans deux directions sensiblement perpendiculaires, une première direction apte à se trouver au moins sensiblement orthogonale au plan longitudinal (pl)de la dent (d) et une seconde direction apte à se trouver au moins sensiblement dans le plan longitudinal (pl) de la dent (d) en direction de son plan transversal (pt).

9. Précelle (1) selon l'une quelconque des revendications 1 à 8, **caractérisée par** des dimensions et des angulations spécialement adaptées à la dent (d) à laquelle elle est destinée et selon le type de technique utilisé par l'orthodontiste.

10. Précelle (1) selon l'une quelconque des revendications 1 à 9, **caractérisée par** un seul prolongement (8) et un seul retour (10) sur l'un seulement des mors (5).

11. Précelle (1) selon l'une quelconque des revendications 1 à 9, **caractérisée par** deux prolongements (8) et deux retours (10), un pour chaque mors (5).

12. Précelle (1) selon l'une quelconque des revendications 1 à 11, **caractérisée en ce qu'**elle est spécialement destinée à l'arcade inférieure de la mâchoire, un prolongement (8) s'étendant à partir d'un mors (5) vers le haut.

13. Précelle (1) selon l'une quelconque des revendications 1 à 11, **caractérisée en ce qu'**elle est spécialement destinée à l'arcade supérieure de la mâchoire, un prolongement (8) s'étendant à partir d'un mors (5) vers le bas.

14. Unité comprenant une précelle (1) selon l'une quelconque des revendications 1 à 13 et un verrou orthodontique (2) ayant deux creux (c) opposés l'un à l'autre ménagés sur les deux faces latérales (fc), aptes à coopérer avec les deux saillies (7) de la précelle (1), de façon amovible et avec ajustement.

15. Ensemble comprenant une pluralité d'unités selon la revendication 14, chaque unité correspondant à l'une des dents (d) devant recevoir un verrou orthodontique (2).

## Claims

1. Tweezers (1) for positioning an orthodontic lock (2) on a tooth (d) including two handling branches (3) provided with elastic means and ending in two jaw plates (5) for gripping the lock (2) with a view to the positioning and most often the connection thereof on/with a tooth (d), at the desired location, and with the desired orientation, further including:
- two facing protrusions (7) provided on the two internal faces (6) of the two jaw plates (5), able to removeably cooperate, with an adjustment, with two opposite recesses (c) provided on the two side faces (fc) of the lock (2),
- at least one extension (8) extending from a free end (9) of at least one of the jaw plates (5), with an appropriate kinking and on an appropriate length, so that the extension (8) is able to extend substantially parallel with the axis (AA) of the tooth (d), towards the occlusal face (fo) thereof, upon the utilization of the tweezers (1),
- at least one angle (10) extending transversally from a free end (11) of at least one extension (8) able to abut against the occlusal face (fo) of the tooth, upon the utilization of the tweezers (1).

2. Tweezers (1) according to claim 1, **characterized in that** the two protrusions (7) are coaxial and able to cooperate with the two coaxial recesses (c), and have a possibility of relative pivoting, at least within some range.

3. Tweezers (1) according to any one of claims 1 and 2, **characterized in that** the two protrusions (7) are coaxial with an axis substantially perpendicular to the respective internal faces (6) of the jaw plates (5).

4. Tweezers (1) according to any one of claims 1 and 2, **characterized in that** the two protrusions (7) are coaxial with an axis inclined with respect to the respective internal faces (6) of the jaw plates (5).

5. Tweezers (1) according to any one of claims 1 to 4, **characterized in that** the two jaw plates (5) have two internal faces (6) parallel to the plane of symmetry (ps) of the tweezers (1).

6. Tweezers (1) according to any one of claims 1 to 4, **characterized in that** the two jaw plates (5) have two parallel internal faces (6) inclined with respect to the plane of symmetry (ps) of the tweezers (1).

7. Tweezers (1) according to any one of claims 1 to 6, **characterized in that** the angle (10) substantially extends in a direction liable to be at least substantially orthogonal to the longitudinal plane (pl) of the tooth (d).

8. Tweezers (1) according to any one of claims 1 to 6, **characterized in that** the angle (10) extends in two substantially perpendicular directions, with a first direction being liable to be at least substantially orthogonal to the longitudinal plane (pl) of the tooth (d) and a second direction liable to be at least substantially in the longitudinal plane (pl) of the tooth (d) towards the transversal plane (pt) thereof.

9. Tweezers (1) according to any one of claims 1 to 8, **characterized by** dimensions and kinkings specially designed for the tooth (d) which they are intended for, and according to the type of technique used by the orthodontist.

10. Tweezers (1) according to any one of claims 1 to 9, **characterized by** only one extension (8) and only one angle (10) on only one of the jaw plates (5).

11. Tweezers (1) according to any one of claims 1 to 9, **characterized by** two extensions (9) and two angles (10), one for each jaw plate (5).

12. Tweezers (1) according to any one of claims 1 to 11, **characterized in that** they are specially intended for the lower arch of jaws, with an extension (8) extending upwards from a jaw plate (5).

13. Tweezers (1) according to any one of claims 1 to 11, **characterized in that** they are more particularly intended for the upper arch of jaws, with an extension (8) extending downwards from a jaw plate (5).

14. A unit including tweezers (1) according to any one of claims 1 to 13 and an orthodontic lock (2) having two opposite recesses (c) provided on the two side faces (fc), able to removeably cooperate, with an adjustment, with the two protrusions (7) on the tweezers (1).

15. A set including a plurality of units according to claim 14, with each unit corresponding to one of the teeth (d) which must be fitted with an orthodontic lock (2).

## Patentansprüche

1. Positionierungspinzette (1) eines kieferorthopädischen Riegels (2) auf einem Zahn (d), die zwei Behandlungsschenkel (3) mit elastischen Mitteln umfasst, die in zwei Backen (5) zum Greifen des Riegels (2) zu seiner Positionierung und in den meisten Fällen seiner festen Befestigung auf einem Zahn (d) an der gewünschten Stelle und mit der gewünschten Ausrichtung enden, die darüber hinaus Folgendes umfasst:
- zwei einander zugewandte Vorsprünge (7), die auf den zwei Innenseiten (6) der zwei Backen (5) ausgespart sind, geeignet sind, abnehmbar zusammenzuwirken, mit einer Anpassung, mit zwei einander gegenüberliegenden Hohlräumen (c), die an den zwei lateralen Seiten (fc) des Riegels (2) ausgespart sind,
- wenigstens einer Verlängerung (8), die sich ab einem freien Ende (9) wenigstens einer Backe (5) mit einer Winkelung und über eine Länge erstreckt, die geeignet sind, dass die Verlängerung (8) geeignet ist, bei der Umsetzung der Pinzette (1), sich deutlich parallel zur Achse (AA) des Zahns (d) in Richtung der Verschlussseite (fo) zu erstrecken,
- wenigstens einen Rücklauf (10), der sich transversal ab einem freien Ende (11) wenigstens einer Verlängerung (8) erstreckt, die bei der Umsetzung der Pinzette (1) geeignet ist, auf der Verschlussseite (fo) des Zahns (d) zum Anschlag zu kommen.

2. Pinzette (1) gemäß Anspruch 1, **dadurch gekennzeichnet, dass** die zwei Vorsprünge (7) koaxial und geeignet sind, mit den zwei koaxialen Hohlräumen (c) mit der Möglichkeit des Schwenkens relativ in wenigstens einer gewissen Spanne zusammenzuwirken.

3. Pinzette (1) gemäß Anspruch 1 und 2, **dadurch gekennzeichnet, dass** die zwei Vorsprünge (7) koaxial zur deutlich lotrecht zu den jeweiligen Innenseiten (6) der Backen (5) geneigten Achse sind.

4. Pinzette (1) gemäß Anspruch 1 und 2, **dadurch gekennzeichnet, dass** die zwei Vorsprünge (7) koaxial zur im Verhältnis zu den jeweiligen Innenseiten (6) der Backen (5) geneigten Achse sind.

5. Pinzette (1) gemäß Anspruch 1 bis 4, **dadurch gekennzeichnet, dass** die zwei Backen (5) zwei zur Symmetrieebene (ps) der Pinzette (1) parallele Innenseiten (6) haben.

6. Pinzette (1) gemäß Anspruch 1 bis 4, **dadurch gekennzeichnet, dass** die zwei Backen (5) zwei parallele, im Verhältnis zur Symmetrieebene (ps) der Pinzette (1) parallele Innenseiten (6) haben.

7. Pinzette (1) gemäß Anspruch 1 bis 6, **dadurch gekennzeichnet, dass** der Rücklauf (10) sich im Wesentlichen in einer Richtung erstreckt, die geeignet ist, sich wenigstens deutlich orthogonal zur Längsebene (pl) des Zahns (d) zu befinden.

8. Pinzette (1) gemäß Anspruch 1 bis 6, **dadurch gekennzeichnet, dass** der Rücklauf (10) sich in zwei deutlich lotrechten Richtungen erstreckt, einer ersten Richtung, die geeignet ist, sich wenigstens deutlich orthogonal zur Längsebene (pl) des Zahns (d) und einer zweiten Richtung zu befinden, die geeignet ist, sich wenigstens deutlich in der Längsebene (pl) des Zahns (d) in Richtung seiner transversalen Ebene (pt) zu befinden.

9. Pinzette (1) gemäß Anspruch 1 bis 8, **gekennzeichnet durch** speziell an den Zahn (d) angepasste Abmessungen und Winkelungen, für den sie bestimmt ist, und gemäß dem vom Kieferorthopäden genutzten technischen Typ.

10. Pinzette (1) gemäß Anspruch 1 bis 9, **gekennzeichnet durch** eine einzige Verlängerung (8) und einen einzigen Rücklauf (10) auf nur einer der Backen (5).

11. Pinzette (1) gemäß Anspruch 1 bis 9, **gekennzeichnet durch** zwei Verlängerungen (8) und zwei Rückläufe (10), einen für jede Backe (5).

12. Pinzette (1) gemäß Anspruch 1 bis 11, **dadurch gekennzeichnet, dass** sie speziell für den unteren Bogen des Kiefers bestimmt ist, wobei sich eine Verlängerung (8) ab einer Backe (5) nach oben erstreckt.

13. Pinzette (1) gemäß Anspruch 1 bis 11, **dadurch gekennzeichnet, dass** sie speziell für den oberen Bogen des Kiefers bestimmt ist, wobei sich eine Verlängerung (8) ab einer Backe (5) nach unten erstreckt.

14. Einheit, die eine Pinzette (1) gemäß Anspruch 1 bis 13 und einen kieferorthopädischen Riegel (2) mit zwei Hohlräumen (c) umfasst, die voneinander abgewandt und auf den zwei Seitenflächen (fc) ausgespart sind, die geeignet sind, mit den zwei Vorsprüngen (7) der Pinzette (1) abnehmbar und mit Anpassung zusammenzuwirken.

15. Struktur, die eine Vielzahl von Einheiten gemäß Anspruch 14 umfasst, wobei jede Einheit einem der Zähne (d) entspricht, der einen kieferorthopädischen Riegel (2) aufnehmen soll.
